# EUROPÄISCHE PATENTSCHRIFT

(11) **EP 1 517 778 B1**
(45) Veröffentlichungstag und Bekanntmachung des Hinweises auf die Patenterteilung: **30.04.2008**
(21) Anmeldenummer: 03738098.7
(22) Anmeldetag: 27.06.2003
(51) Int. Cl.: B29C 67/00, C08F 222/32

(54) **KOMBINATION AUS BAUMATERIAL UND BADFLÜSSIGKEIT ZUR VERWENDUNG IN RAPID-PROTOTYPING-VERFAHREN**
COMBINATION OF A MATERIAL AND A BATH FLUID FOR USING IN RAPID PROTOTYPING METHODS
COMBINAISON D'UN MATERIAU DE CONSTRUCTION ET D'UN LIQUIDE DE BAIN A UTILISER DANS DES PROCEDES DE PROTOTYPAGE RAPIDE

(30) Priorität: 28.06.2002 DE 10229124
(43) Veröffentlichungstag der Anmeldung: 30.03.2005
(73) Patentinhaber: Polymaterials AG, 87600 Kaufbeuren (DE)
(72) Erfinder: WIESE, Hinrich, 86899 Landsberg am Lech (DE); MAIER, Gerhard, 80807 München (DE)
(74) Vertreter: Adam, Holger
(86) Internationale Anmeldenummer: PCT/EP2003/006858
(87) Internationale Veröffentlichungsnummer: WO 2004/002721

(56) Entgegenhaltungen:
- EP-A- 0 895 850
- WO-A-01/26885
- WO-A-01/78968
- US-A- 3 259 534
- US-A- 3 832 334
- US-A- 4 812 546
- US-A- 5 589 554

## Beschreibung

Die vorliegende Erfindung betrifft Kombinationen aus einem Baumaterial und einer Badflüssigkeit für Verfahren zum direkten Ausdrucken von Anschauungsmodellen bzw. Bauteilen, insbesondere für die Anwendung im Büro- oder Privathaushalt-Bereich ("Office-Bereich"). Die Erfindung betrifft des Weiteren die aus den erfindungsgemäßen Kombinationen hergestellten Bauteile bzw. Modelle. Die Verwendung der erfindungsgemäßen Kombinationen in Rapid-Prototyping-Verfahren erlaubt die Herstellung von Bauteilen mit variierenden mechanischen Eigenschaften. Durch die Zugabe von Farben können farbige Bauteile erhalten werden. Die Bauteile aus den erfindungsgemäßen Baumaterialien weisen mechanische Eigenschaften, eine Wärmeformbeständigkeit und eine Detailgenauigkeit auf, durch die sie als Anschauungs- und Diskussionsmodelle für Design-, Architektur-, Konstruktions- und andere Entwürfe geeignet sind. Durch Nachbehandlung können die Oberflächengüte sowie die Steifigkeit und Härte der Bauteile verbessert werden.

Verschiedene Verfahren zur Herstellung von beliebig geformten dreidimensionalen Körpern auf Basis von Computerdateien (z. B. CAD) beispielsweise als Diskussions-, Anschauungs-, Design- oder Funktionsmodell sind unter der Bezeichnung "rapid prototyping" bekannt. Bei den meisten dieser Verfahren werden die dreidimensionalen Objekte schichtweise aufgebaut.

Von besonderer Bedeutung sind hier die Folgenden:
- Stereolithographie (SLA) (Photopolymere werden durch Bestrahlen mit einem geeigneten Laser ausgehärtet): Man erhält Bauteile in guter Auflösung und mit mechanischen Eigenschaften, die mit denen technischer Kunststoffe vergleichbar sind. Nachteilig sind Kosten des Verfahrens (Laser) sowie die Gefahrenquellen, die in den toxischen Edukten und der Anwendung des Lasers liegen.
- selektives Lasersintern (SLS) (Metalle, Kunststoffe oder Keramik; im Fall von Kunststoffen wird Pulver mittels eines Lasers schichtweise verschmolzen): Die Bauteile erreichen mit besonders geeigneten Materialien nahezu die gleiche Festigkeit wie Spritzgussteile aus dem gleichen Material. Allerdings erfordert die Handhabung des Pulvers (typische Teilchengrößen 20-50µm) erheblichen Aufwand um die Kontamination der Umgebung mit dem Pulver zu vermeiden.
- 3-D-Drucken (3DP) (Pulver werden mit flüssigen Bindern zu dreidimensionalen Körpern verbunden). Das Verfahren ist schnell, führt aber zu Bauteilen mit mäßiger Auflösung und oft unbefriedigenden mechanischen Eigenschaften. Diese können jedoch gegebenenfalls durch einen nachgeschalteten Schritt verbessert werden.
- Fused Deposition Molding (FDM) (Schmelzen von Wachsen oder niedrigschmelzenden Thermoplasten werden strang- oder tropfenweise zu den gewünschten Formkörpern deponiert und verfestigen sich dann). Es können beispielsweise Thermoplaste (z.B. Polyamid oder Acrylnitril-Butadien-Styrol-Copolymere) eingesetzt werden. Allerdings ist die Auflösung bzw. Detailgenauigkeit gering.

Ein neues Verfahren, das mit einem relativ einfachen Aufbau auskommt und daher auch für Anwendungen im Büro- oder Privathaushalt-Bereich geeignet ist und keine besondere Ausbildung der Benutzer erfordert, wird in der WO 01/26885, die die Priorität der DE 199 48 591 A1 in Anspruch nimmt, beschrieben. Es beruht auf der Anwendung eines niederviskosen, flüssigen Baumaterials, das mittels Drop-on-Demand-Technik (vergleichbar einem Tintenstrahldrucker) computergesteuert an bestimmten Positionen auf einer Bauunterlage deponiert wird und sich dabei durch einen physikalischen oder chemischen Prozeß verfestigt. Durch schichtweise Deposition des Baumaterials wird Schritt für Schritt ein beliebig geformter dreidimensionaler Körper aufgebaut. Die Bauunterlage befindet sich dabei in einem Bad, wobei die Badflüssigkeit die Aufgabe hat, die nicht durch das Baumaterial gefüllten Bereiche zu füllen und als Stützmaterial beim Aufbau von überhängenden Strukturen zu dienen.

Geeignete Materialien werden in der WO 01/26885 nicht näher beschrieben. Es wird lediglich erwähnt, dass thermoplastische oder wachsartige Materialien mit einer Viskosität von nicht mehr als 20 mPa·s bei einer Temperatur von nicht mehr als 130°C eingesetzt werden können, die bei der Deposition abkühlen und daher fest werden. Außerdem wird erwähnt, dass die Verfestigung auch durch chemische Reaktion durch den Kontakt mit einem Inhaltsstoff der Badflüssigkeit oder durch thermisch ausgelöste Vernetzung hervorgerufen werden kann.

Baumaterialien wie z.B. die in der WO 01/26885 erwähnten Wachse, die sich allein durch Abkühlen von der Verarbeitungstemperatur (nach der in der WO 01/26885 beschriebenen Methode maximal 130°C) auf Raumtemperatur verfestigen und trotzdem die geforderte sehr geringe Viskosität für die Verarbeitung aufweisen, besitzen eine zu geringe Wärmeformbeständigkeit. Sie beginnen bereits bei Temperaturen wenig über Raumtemperatur zu erweichen, so dass sie nicht für Modelle, die angefasst werden sollen, dienen können. Außerdem können mit diesen Materialien keine Funktionsmodelle hergestellt werden, da die mechanischen Eigenschaften unzureichend sind.

Aus den Beschreibungen in der WO 01/26885 geht nicht hervor, wie geeignete Baumaterialien zusammengesetzt sein sollen, die die Anforderung der niedrigen Viskosität bei der Verarbeitungstemperatur erfüllen, durch eine chemische Reaktion oder durch thermische Vernetzung verfestigt werden können, und dann eine hinreichende Wärmeformbeständigkeit sowie gute mechanische Eigenschaften besitzen.

Der erfolgreiche Einsatz des in der WO 01/26885 beschriebenen Verfahrens stellt sehr hohe Anforderungen an Baumaterial, Bad und die Kombination daraus. Funktionierende Systeme dieser Art sind nicht bekannt. Die Anforderungen an solche Systeme sind folgende: Die Verfestigung muß ausreichend schnell ablaufen, um eine genügend gute Auflösung der erzeugten Strukturen zu erreichen, da ein Verfließen des Baumaterials aufgrund zu langsamer Härtung die Auflösung verringert. Gleichzeitig muß aber die Härtung langsam genug erfolgen, um ein Aneinanderhaften oder Verkleben der Tropfen untereinander sowie zwischen aufeinanderfolgenden Schichten zu gewährleisten. Außerdem muß sichergestellt sein, dass sich das Baumaterial erst beim Kontakt mit der Badflüssigkeit verfestigt, nicht bereits in den Austrittsöffnungen der Depositionsvorrichtung oder in Vorratsgefäßen. Für die Anwendung im Büro- oder Privatbereich mit Bedienung durch nicht geschulte Personen ist zudem erforderlich, dass die Komponenten, insbesondere die Badflüssigkeit, nicht toxisch sind und die Entsorgung der Badflüssigkeit durch die normale Kanalisation ohne weitere Vorkehrungen möglich ist. Dies schließt beispielsweise den Einsatz der meisten bekannten, technisch genutzten Monomere und Initiatoren zur Polymerbildung oder Vernetzung als Bestandteile der Badflüssigkeit praktisch aus. Die Anforderung an die mechanische Festigkeit der erzeugten dreidimensionalen Teile lässt Materialien, die nach der Verfestigung pulverförmige, kristalline Produkte ergeben (z.B. Lösungen von niedermolekularen oder polymeren Substanzen, die beim Kontakt mit der Badflüssigkeit ausgefällt werden), ebenfalls ausscheiden. Wachsartige Materialien weisen in den meisten Fällen eine zu geringe Wärmeformbeständigkeit auf. Es ist zwar möglich, mit dem in der WO 01/26885 beschriebenen Verfahren mit bestimmten Wachsen dreidimensionale Formteile herzustellen, jedoch beginnen diese bereits bei Kontakt mit der Hand durch die Körpertemperatur zu erweichen.

Daher besteht bei der Anwendung des in der WO 01/26885 beschriebenen Verfahrens zur Herstellung von dreidimensionalen Bauteilen das Problem, dass gegenwärtig keine geeigneten Baumaterialien und Badflüssigkeiten bekannt sind, die Bauteile mit hinreichend hoher Wärmeformbeständigkeit und mechanischer Stabilität ergeben.

Auch in der WO 01/78968 wird der Aufbau fester oder halbfester Körper durch schichtweises Aufbringen von Tropfen oder Strängen auf eine in einer Badflüssigkeit befindliche Unterlage beschrieben. Für das dort beschriebene Verfahren ist jedoch erforderlich, dass sich die Austrittsöffnung der Dosiervorrichtung unterhalb der Oberfläche der Badflüssigkeit befindet. Die dort beschriebenen Materialien (u.a. bei Raumtemperatur flüssige Oligomere oder Polymere, Schmelzen von Oligomeren oder Polymeren, reaktive Oligomere oder Polymere, Gele, Pasten) weisen entweder eine zu hohe Viskosität für die Dosierung z.B. mit einem einfachen Tintenstrahldruckkopf auf, oder es gelten ähnliche Einschränkungen wie für die WO 01/26885, nämlich dass auch in der WO 01/78968 keine Hinweise darauf enthalten sind, wie zu verhindern ist, dass ein reaktives Material beim Eindosieren in die Badflüssigkeit sofort erhärtet und damit die Dosiervorrichtung verstopft. Insbesondere bei der Anwendung eines Baumaterials, das im wesentlichen aus einem flüssigen Monomer besteht, in Kombination mit einer wässrigen Badflüssigkeit, ergibt sich das Problem, dass bei Anwendung des in WO 01/78968 beschriebenen Verfahrens mit einer Dosiervorrichtung, deren Öffnung unterhalb der Badoberfläche liegt, nicht zu verhindern ist, dass das flüssige Monomer nach der Dosierung im Bad beliebig verfließt. Zudem können mit Wasser als Badflüssigkeit nur sehr wenige Monomere verarbeitet werden, da deren Dichte größer als 1g/cm³ sein muss, um zu verhindern, dass das flüssige Monomer aufschwimmt. Diese Probleme können nur gelöst werden, wenn das flüssige Monomer sehr schnell polymerisiert, woraus sich aber das Problem ergibt, dass es auch bereits in der Austrittsöffnung der Dosiervorrichtung polymerisiert und diese verstopft Die in WO 01/78968 beschriebene Anwendung von retardierenden Substanzen (Ansprüche 21-23 in WO 01/78968) ist in diesem Zusammenhang kontraproduktiv. Daher können die in WO 01/78968 beschriebenen Materialien nicht für das in WO 01/26885 beschriebene Verfahren eingesetzt werden.

Aufgabe der vorliegenden Erfindung ist daher die Bereitstellung geeigneter niederviskoser Baumaterialien und Badzusammensetzungen zur Herstellung von dreidimensionalen Modellen oder Bauteilen mittels eines Verfahrens, vorzugsweise des in der WO 01/26885 beschriebenen Verfahrens, bei dem das Baumaterial computergesteuert schichtweise auf einer Unterlage an bestimmten Stellen in Form einzelner Tropfen deponiert und dort in Gegenwart einer Badflüssigkeit chemisch verfestigt wird, wobei sich die Austrittsöffnung der Dosiervorrichtung oberhalb der Oberfläche der Badflüssigkeit befindet, um ein Verkleben der Austrittsöffnungen zu verhindern.

Die Baumaterialien und Badzusammensetzungen sollen kostengünstig sein und keine toxischen Verbindungen enthalten. Auch sollen sie leicht handhabbar sein, um eine Anwendung im Büro- oder Privathaushalt-Bereich (Office-Bereich) durch einen Benutzer ohne besondere Ausbildung zu ermöglichen.

Das ausgehärtete Baumaterial, d.h. die erhaltenen dreidimensionalen Modelle sollen eine gute Wärmeformbeständigkeit und weitere günstige mechanische und andere physikalische Eigenschaften aufweisen, so dass Modelle zum Anfassen oder auch Funktionsmodelle erhalten werden können. Schließlich sollen die erhaltenen dreidimensionalen Modelle eine gute Detailgenauigkeit aufweisen. In bestimmten Ausführungsformen sollen die Bauteile auch als Zellträger (Scaffold) für Geweberegeneration (Tissue Engineering) geeignet sein.

Die Aufgabenstellung kann im Prinzip dadurch gelöst werden, dass eine Kombination von Baumaterial und Badflüssigkeit verwendet wird, wobei das Baumaterial ("Tinte") dünnflüssige, niedermolekulare Verbindungen enthält, die in der Lage sind, beim Kontakt mit der Badflüssigkeit schnell Polymere mit hinreichenden mechanischen Eigenschaften aufzubauen. Dies kann entweder geschehen, indem ein oder mehrere in dem Baumaterial enthaltene Monomere beim Kontakt mit der Badflüssigkeit polymerisieren, oder indem ein oder mehrere im Baumaterial enthaltene niederviskose multifunktionelle Verbindungen durch Reaktion mit in der Badflüssigkeit enthaltenen oligomeren oder polymeren Verbindungen ein verzweigtes oder vernetztes Polymer aufbauen.

Dabei erfolgt die Deposition des Baumaterials ("Tinte") mittels einer geeigneten Dosiervorrichtung, z.B. eines Tintenstrahldruckkopfs, tropfenweise in die Badflüssigkeit, und zwar in Schichten entsprechend aufeinanderfolgenden Querschnitten des gewünschten Bauteils. Dabei wird die erste Schicht auf eine Bauplattform oder eine andere geeignete Unterlage abgeschieden. Die folgenden Schichten können dann jeweils auf die vorhergehenden Schichten oder die Badoberfläche aufgebracht werden, je nach Erfordernissen der Form des gewünschten Bauteils. Durch die Abfolge genügend vieler Schichten wird ein dreidimensionales Bauteil erhalten.

Die Tropfen werden mittels eines Dosiersystems erzeugt, welches in der Lage ist, einzelne Tropfen oder Ströme von Tropfen mit einem Durchmesser im Bereich von 20-200µm, vor zugsweise 50-90µm, zu erzeugen und diese Tropfen an einer vorbestimmbaren Position zu deponieren, beispielsweise nach dem Prinzip des Tintenstrahldruckkopfs. Das Baumaterial muss in dem Zustand, in dem es verarbeitet wird, vorzugsweise eine Viskosität <200mPa.s, besonders bevorzugt <30 mPa·s, sowie eine im Verhältnis zur Badflüssigkeit geeignete Oberflächenspannung zur genauen Dosierung aufweisen und nach der Deposition schnell polymerisieren, wobei eine gute Verbindung der Tropfen untereinander sowie zu dem Baumaterial der vorherigen Schicht erzielt werden muss. Gleichzeitig muss sichergestellt sein, dass das Baumaterial nicht vorzeitig im Vorratsbehälter, in der Dosiervorrichtung und den zugehörigen Verbindungen sowie in der Düse oder sonstigen Austrittsöffnung erstarrt.

Dies kann im Fall der monomerbasierenden Baumaterialien z.B. erreicht werden, indem die Badflüssigkeit einen Initiator oder Katalysator enthält, der die Polymerisation des Monomers bzw. der Monomermischung im Baumaterialtropfen auslöst. Alternativ kann das Baumaterial selbst den Initiator oder Katalysator und zusätzlich dazu einen Inhibitor oder Stabilisator enthalten, wobei der Inhibitor oder Stabilisator so ausgewählt wird, dass er durch eine im Bad enthaltene Verbindung deaktiviert werden kann. Weiterhin kann das Initiator- oder Katalysatorsystem auch aus mehreren Komponenten bestehen, von denen eine oder mehrere im Bad, die anderen im Baumaterial enthalten sind. Die Polymerisation wird dann erst beim Kontakt zwischen Baumaterial und Bad ausgelöst, wenn alle Komponenten zusammenkommen. Im Fall der vernetzerbasierten Baumaterialien kann ein definierter Reaktionsbeginn zudem dadurch sichergestellt werden, dass die multifunktionellen Verbindungen im Baumaterial so ausgewählt werden, dass sie nur mit den multifunktionellen Oligomeren oder Polymeren das Bads reagieren können, nicht untereinander.

Die Begriffe "Initiator", "Katalysator", "Stabilisator" und "Inhibitor" werden hier gemäß der in der Fachliteratur der Polymerchemie verwendeten Definitionen verwendet.

Gemäß der vorliegenden Erfindung wird eine Kombination aus mindestens einem Baumaterial und einer Badflüssigkeit für ein Verfahren zum direkten Ausdrucken von Bauteilen und Modellen bereitgestellt, dadurch gekennzeichnet, dass
A) das Baumaterial mindestens eine niederviskose Monomer- oder Oligomerverbindung mit einer Viskosität < 200 mPa·s enthält, die in Kontakt mit der Badflüssigkeit durch Polymerisation mindestens einer Komponente polymerisiert, und
   die Badflüssigkeit aus einer wässrigen Lösung besteht, die einen Initiator enthält, der die Polymerisation zumindest eines Bestandteils des Baumaterials initiiert,
wobei das Baumaterial ein Cyanacrylat der allgemeinen Formel CH₂=C(CN)COOR, eine Mischung aus Cyanacrylaten oder eine Mischung von einem oder mehreren Cyanacrylat(en) mit weiteren anionisch polymerisierbaren Verbindungen enthält, wobei der Rest R lineare oder verzweigte, ein- oder mehrfach substituierte oder unsubstituierte, aliphatische, cycloaliphatische oder olefinische Gruppen mit 1-10 C-Atomen, ein- oder mehrfach substituierte oder unsubstituierte Aromaten mit 6-18 C-Atomen und gesättigte, ungesättigte und aromatische 3- bis 7-gliedrige heterocyclische Gruppen mit einem oder mehreren Heteroatom(en) unabhängig voneinander ausgewählt aus N, S, O und P, die mit einem oder mehreren Substituenten substituiert sein können, wobei die Substituenten ausgewählt sind aus Halogen (F, Cl, Br, I), Hydroxy, Oxo, Cyano, C1-8-Alkoxy, Amino, Mono- oder Di(C1-8)alkylamino, Nitro, Mercapto und -S(O)n(C1-8)-Alkyl (n= 0, 1, 2), umfasst
und die Badflüssigkeit eine basische wässrige Lösung ist.

"Niederviskos" bedeutet in diesem Zusammenhang eine Viskosität bei Raumtemperatur kleiner als etwa 200 mPa·s, bevorzugt kleiner als etwa 30 mPa·s.

"Multifunktionelle Verbindungen" im Sinne der Erfindungen sind Verbindungen mit mindestens zwei reaktiven funktionellen Gruppen , wobei die funktionellen Gruppen z.B. Isocyanat-, Carbonsäure-, Sulfonsäure-, Carbonsäurechlorid-, Sutfonsäurechlorid-, Carbonsäureanhydrid-, Epoxid-, Alkoxysilan-, Chlorsilan-, Acetoxysilan-, Amin-, Alkohol-, Mercaptan-, Acrylgruppen und andere aus der organischen und anorganischen Chemie bekannte, zum Polymeraufbau oder zur chemischen oder physikalischen Vernetzung geeignete Gruppen sind.

Eine bevorzugte erfindungsgemäße Kombination von Baumaterial und Badflüssigkeit umfasst als Baumaterial ein Cyanacrylat, eine Mischung aus Cyanacrylaten oder eine Mischung aus einem oder mehreren Cyanacrylat(en) mit weiteren anionisch polymerisierbaren Verbindungen, wobei das Baumaterial einen sauren Stabilisator enthält, der die vorzeitige Polymerisation verhindert. Als Badflüssigkeit wird dabei eine basische wässrige Lösung verwendet.

Cyanacrylate der allgemeinen Formel 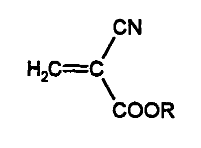 sind bevorzugte Bestandteile des Baumaterials. Der Rest R umfasst lineare oder verzweigte, ein- oder mehrfach substituierte oder unsubstituierte, aliphatische, cycloaliphatische oder olefinische Gruppen mit 1-10 C-Atomen, wie Methyl-, Ethyl-, Propyl-, Butyl-, Pentyl- und Hexyl-, Cyclopentyl-, Cyclohexyl-, Vinyl-, Propenyl- und Butenylgruppen,
ein- oder mehrfach substituierte oder unsubstituierte Aromaten mit 6-18 C-Atomen, wie Phenyl-, Naphthyl-, Anthranyl-, Biphenyl- und Triphenylgruppen,
gesättigte, ungesättigte und aromatische 3- bis 7-gliedrige heterocyclische Gruppen mit einem oder mehreren Heteroatom(en) unabhängig voneinander ausgewählt aus N, S, O und P, die mit einem oder mehreren Substituenten substituiert sein können,
wobei die Substituenten der vorstehend genannten Reste R ausgewählt sind aus Halogen (F, Cl, Br, I), Hydroxy, Oxo, Cyano, C₁₋₈-Alkoxy, Amino, Mono- oder Di(C₁₋₈)alkylamino, Nitro, Mercapto und -S(O)n(C₁₋₈)-Alkyl (n= 0, 1, 2).

Bevorzugt im Sinne der vorliegenden Erfindung sind Methylcyanacrylat, Ethylcyanacrylat, Butylcyanacrylat und 2-Methoxyethylcyanacrylat. Besonders bevorzugt ist, vor allem im Hinblick auf den Einsatz im Office-Bereich, Ethylcyanacrylat und 2-Methoxyethylcyanacrylat. Die Verwendung von Cyanacrylat-basierten Baumaterialien hat den Vorteil, dass die handelsüblichen Lösemittel für Cyanacrylatkleber ("Supeffleber", "Sekundenkleber") zum Reinigen der Dosiervorrichtung bzw. des Druckkopfs verwendet werden können. Als Materialien für die Vorratsbehälter für das Baumaterial kommen die gleichen Werkstoffe in Frage wie für Gebinde für Cyanacrylatkleber.

Die Auslösung der Polymerisation bei der Deposition erfolgt an der Oberfläche der einzelnen Tropfen durch den Kontakt des bzw. der Cyanacrylat-Monomere mit der wässrigen Badflüssigkeit, wobei der saure Stabilisator durch die Base in der Badflüssigkeit neutralisiert wird und so seine Wirksamkeit verliert. Somit wird die Polymerisation initiiert. Dabei können die eventuell vorhandenen weiteren Comonomere entsprechend ihres Copolymerisationsverhaltens in mehr oder weniger großem Umfang mit polymerisiert werden.

Überraschenderweise gelingt der Aufbau von hochmolekularen Polymeren bei Anwendung der erfindungsgemäßen Kombinationen von cyanacrylathaltigem Baumaterial und basischer wässriger Badflüssigkeit trotz des Überschusses an Wasser als Initiator, weil durch die tropfenweise Einbringung des Baumaterials in die Badflüssigkeit, die geringe Löslichkeit von Wasser im Baumaterial und die hohe Geschwindigkeit, mit der die Baumaterialtropfen sich verfestigen, der Kontakt der Monomere mit der Badflüssigkeit nur während eines kurzen Zeitraums und nur an der Tropfenoberfläche stattfindet, so dass nur relativ wenige Wassermoleküle oder Hydroxidionen die Polymerisation des Cyanacrylats starten können. Da die Polymerisation zunächst an der Tropfenoberfläche beginnt, bildet sich dort Polymer, welches das Eindringen von weiterem Wasser soweit verhindert, dass die Tropfen von außen nach innen fortschreitend polymerisieren können.

Der in der Literatur (D. R. Robello, T. D. Eldridge, M. T. Swanson, J. Polym. Sci, Part A, 1999, 37, 4570-4581) beschriebene Abbau der Molmasse von Polycyanacrylaten in Gegenwart von Wasser kann gemäß der vorliegenden Erfindung durch den Einsatz geeigneter Comonomere zusammen mit Cyanacrylatmonomeren im Baumaterial erreicht werden, obwohl die Polymerisation durch den Kontakt mit einem basischen wässrigen Bad nach einem anionischen Mechanismus abläuft. Dies steht im Gegensatz zum bekannten Stand der Technik, nach dem dies nur dann möglich ist, wenn die Polymerisation nach einem radikalischen Mechanismus erfolgt.

Besonders geeignete Comonomere in diesem Sinne sind cyclische Comonomere, insbesondere Lactide, d.h. cyclische Doppelester von α-Hydroxycarbonsäuren, wie 3,6-Dimethyl-1,4-dioxan-2,5-dion (das "Lactid"), oder auch cyclische Anhydride wie Maleinsäureanhydrid, oder Epoxide, insbesondere Glycidylverbindungen wie Gylcidylmethacrylat und Butandioldiglycidylether. Die Lactide liegen in einem Anteil von 1-25 Gew.-%, vorzugsweise 5-20 Gew.-%, die cyclischen Anhydride liegen in einem Anteil von 1-25 Gew.%, vorzugsweise 2-10 Gew.-% und die Epoxide in einem Anteil von 0,1-5 Gew.-%, vorzugsweise 0,5-3 Gew.-%, jeweils bezogen auf die Gesamtförmulierung, vor. Die daraus hergestellten Polymere zeigen auch bei längerer Verweilzeit in alkalischen wässrigen Flüssigkeiten keine Verfärbung sowie keinen wesentlichen Verlust der mechanischen Eigenschaften und der Molmasse und weisen somit eine verbesserte Hydrolysestabilität gegenüber Polycyanacrylaten ohne diese Comonomeren auf. Dies ist für die vorliegende Erfindung von besonderer Bedeutung, da die Bauteile je nach Größe gegebenenfalls längere Zeit während des Bauvorgangs in der basischen wässrigen Badflüssigkeit verbleiben. Die erhöhte Stabilität von Polycyanacrylaten durch Lactid ist anhand des Polyethylcyanacrylats im Beispiel 7 dargestellt. Die Verbesserung der mechanischen Eigenschaften durch Glycidylverbindungen ist aus Beispiel 8 ersichtlich.

Neben den Monomeren können im Baumaterial weitere Additive zur Eigenschaftsanpassung enthalten sein. Hier sind besonders hervorzuheben Stabilisatoren, oberflächenaktive Substanzen (Tenside, Seifen, amphiphile Oligomere und Polymere), Farbstoffe und Lösungsmittel.

In der bevorzugten Ausführungsform des Baumaterials ist neben einem Cyanacrylat oder einem Gemisch aus Cyanacrylaten und/oder weiteren Comonomeren ein saurer Stabilisator enthalten, wobei unter sauren Stabilisatoren" sowohl Bronsted- als auch Lewissäuren, sowie auch Verbindungen zu verstehen sind, die bei Kontakt mit Luftfeuchtigkeit oder Wasser saure Verbindungen ergeben. Die Stabilisatoren müssen eine hinreichend niedrige Flüchtigkeit aufweisen, um eine genügend lange Stabilität auch in Gegenwart von Luft bzw. Luftfeuchtigkeit zu gewährleisten. Eingesetzt werden können Gase wie Schwefeldioxid oder Chlorwasserstoff, organische Säuren wie Carbonsäuren (z.B. Ameisensäure, Essigsäure, Benzoesäure und andere aus der organischen Chemie bekannte Carbonsäuren) oder Sulfonsäuren (z.B. Methansulfonsäure, Ethansulfonsäure, Trifluormethansulfonsäure, Toluolsulfonsäure und andere aus der organischen Chemie bekannten Sulfonsäuren) oder organische Phosphonsäuren (z.B. Vinylphosphonsäure). Bevorzugte Stabilisatoren sind Sulfonsäuren, besonders bevorzugt ist Ethansulfonsäure.

In der bevorzugten Ausführungsform des Baumaterials ist neben einem Cyanacrylat oder einem Gemisch aus Cyanacrylaten und/oder weiteren Comonomeren und einer Sulfonsäure als Stabilisator zusätzlich eine oberflächenaktive Verbindung wie z.B. Laurylsulfonsäure-Natriumsalz, Dodecyldimethyl(3-sulfopropyl)ammoniumhydroxid oder perfluorierte aliphatische Polyester (z.B. im Handel erhältlich als Fluorad FC 4430) enthalten. Diese Verbindungen dienen zur Anpassung der Oberflächenspannungen von Baumaterial, Bad und Bauteil (bereits verfestigte frühere Schichten) aneinander.

Das Baumaterial kann auch Farbstoffe enthalten, um farbige Bauteile herstellen zu können. Der Einsatz der drei Grundfarben Cyan, Magenta und Gelb ermöglicht beliebig gefärbte Bauteile, wenn das Prinzip der Mehrfach-Dosiereinrichtungen angewendet wird, das beim farbigen zweidimensionalen Tintenstrahldrucker eingesetzt wird.

Die mechanischen Eigenschaften der fertigen Bauteile können durch die Anwesenheit der Comonomere beeinflusst werden. Werden mehrere, unterschiedliche Baumaterialien in einer Mehrfach-Dosiereinrichtung eingesetzt, so können Bauteile mit definierten, lokal unterschiedlichen mechanischen Eigenschaften, z.B. zur Simulation bestimmter Funktionen, hergestellt werden.

Die wässrige Badflüssigkeit kann neben der Base zur Neutralisation des sauren Stabilisators auch weitere Additive enthalten. Hier sind besonders zu nennen: oberflächenaktive Substanzen (Tenside, Seifen, amphiphile Oligomere und Polymere), wasserlösliche Verbindungen und Salze, um die Polarität, lonenstärke, Viskosität und Dichte der Badflüssigkeit einzustellen, sowie funktionelle anwendungsspezifische Additive, z.B. biochemisch wirksame Substanzen.

Beispiele für solche Komponenten sind Ethylenglykol, Glyzerin, Poly(ethylenglykol), Poly(propylenglykol), Poly(ethylenglykol-co-propylenglykol), Poly(hydroxyethylacrylat), Poly(ethylenimin), Polysaccharide wie Stärke, Zuckerderivate, Polypeptide wie Gelatine, Aminosäuren, Salze wie Natriumchlorid, Calciumchlorid, oberflächenaktive Substanzen wie Laurylsulfonsäure-Natriumsalz, Ester von Sulfobernsteinsäure-Natriumsalz, und weitere, dem Fachmann für solche Anwendungen geläufige Verbindungen.

Für den Aufbau relativ großer Formteile muss eine hinreichend große Menge Base im Bad enthalten sein. Bevorzugte Basen sind Alkali- und Erdalkalihydroxide sowie gesundheitlich unbedenkliche Amine wie Phenylglycin oder basische Aminosäuren bzw. deren Derivate. Besonders bevorzugt ist Natriumhydroxid.

Alternativ oder zusätzlich kann eine ausreichende Basenkapazität auch durch den Einsatz von an sich bekannten Puffersystemen sichergestellt werden.

Zusätzlich zur Base können auch weitere Initiatoren für die anionische Polymerisation vorhanden sein, beispielsweise Alkyl- oder Arylphosphine, insbesondere Tributylphosphin.

Wenn die Viskosität des Bades zu gering ist, werden durch das Absenken der Bauunterlage Wellen erzeugt, welche die Geometrie des Bauteiles beeinflussen können. Um das zu verhindern, darf die Badviskosität nicht zu gering sein. Andererseits erfolgt bei zu großer Badviskosität die Benetzung des Bauteils beim Absenken zu langsam. Die Viskosität der Badflüssigkeit wird am besten durch Zugabe wasserlöslicher Substanzen wie z. B. Oligomere oder Polymere (PEG, aber auch Biopolymere wie Stärke oder Gelatine), sowie Zuckerderivate eingestellt. Bevorzugt ist eine Viskosität <200 mPa·s, besonders bevorzugt < 30 mPa·s.

Eine wichtige Rolle spielt auch die Dichte der Badflüssigkeit: Sie muss dem Baumaterial genügend Auftrieb geben, damit überhängende Strukturen erzeugt werden können, aber andererseits darf der Auftrieb das Formteil beim Absenken nicht verformen. Die Dichte wird ebenfalls durch die Zugabe der oben beschriebenen Komponenten eingestellt. Sie soll bevorzugt beim 0,95-1,15-fachen der Dichte des Baumaterials liegen.

Für Anwendungen in speziellen Bereichen, die nicht den Beschränkungen hinsichtlich Handhabbarkeit, Toxizität und Entsorgung unterliegen wie der Office-Bereich, und in denen die Anwendung durch geschultes Personal möglich ist, kann an Stelle eines wässrigen Bades auch ein Bad aus gängigen organischen Lösungsmitteln verwendet werden. In diesem Fall können auch die bekannten Initiatoren für anionische Polymerisation wie z.B. Organometallverbindungen (z.B. Butyllithium, Naphthalin-Natrium), Alkoholate (z.B. Kalium-tert.-butylat), Phosphine (z.B. Tributylphosphin) und andere verwendet werden. Auch das Baumaterial kann für solche Anwendungen Lösungsmittel enthalten.

Die für den Office-Bereich besonders bevorzugte allgemeine Kombination aus Baumaterial und Badflüssigkeit enthält folgende Komponenten:
*Baumaterial:* Anionisch polymerisierbares Cyanacrylat oder ein Gemisch aus Cyanacrylaten, kombiniert mit Lactid, Maleinsäureanhydrid oder Glycidylmethacrylat als Comonomer und einer Alkylsulfonsäure als Stabilisator.
*Badflüssigkeit:* 0,05 bis 5%ige wässrige Natriumhydroxidlösung mit 0,1 - 10% eines ionischen oder nichtionischen Tensids und 1 - 30% eines Polyethylenglycols mit einer Molmasse zwischen 300 und 1000.
*Funktionsweise:* Beim Eindringen der Baumaterialtropfen in die Badflüssigkeit wird die Alkylsulfonsäure durch das Natriumhydroxid neutralisiert und die Polymerisation des Cyanacrylats gestartet. Die Löslichkeit von Wasser im Polycyanacrylat ist nicht hinreichend, um größere Mengen Wasser in die Baumaterialtropfen eindiffundieren zu lassen. Dadurch kann ein hochmolekulares Polymer gebildet werden. Die Anwesenheit des Comonomers führt zur Bildung eines hydrolysestabilen Materials.
Eine besonders bevorzugte spezielle Zusammensetzung des Baumaterials enthält Ethylcyanacrylat, Glycidylmethacrylat und Ethansulfonsäure. Die besonders bevorzugte zugehörige Badflüssigkeit besteht aus einer 0,5 bis 2%igen wässrigen Natriumhydroxidlösung mit 1-5% eines ionischen oder nichtionischen Tensids (z.B. einem perfluorierten aliphatischen Polyester wie Fluorad FC 4430) und 5- 20% PEG 400.

Weitere bevorzugte alternative Kombinationen aus Baumaterial und Badflüssigkeit, die gemäß der vorliegenden Erfindung verwendet werden können, sind die folgenden:
*1. Baumaterial.* Radikalisch polymerisierbares Monomer (z.B. Acrylate, Methacrylate, Styrol, Styrolderivate, Vinylester, Vinylidenverbindungen, Diene und andere, sowie Mischungen aus diesen oder ähnlichen Verbindungen), versetzt mit einer Komponente eines Redox-Initiatorsystems (vorzugsweise dem Reduktionsmittel).
   *Badflüssigkeit:* Lösung der zweiten Komponente des Redox-Initiatorsystems (vorzugsweise dem Oxidationsmittel) in einem Nichtlösungsmittel für das entstehende Polymer. Bei dem Nichtlösungsmittel kann es sich auch um Wasser handeln.
   *Funktionsweise:* Beim Eindringen der Baumaterialtropfen in die Badflüssigkeit kommen die beiden Bestandteile des Redox-Initiatorsystems an der Grenzfläche in Kontakt und reagieren miteinander unter Radikalbildung. Die Radikale starten die Polymerisation des Monomers, wodurch die Tropfen aushärten. Die Polarität von Baumaterial und Badflüssigkeit bzw. die Löslichkeiten der Bestandteile des Redox-Initiatorsystems müssen so aufeinander abgestimmt werden, dass die Radikalbildung durch Reaktion der Initiatorkomponenten lange genug anhält, um die Tropfen auszupolymerisieren. Zu diesem Zweck können Bad und Baumaterial geeignete Additive enthalten.
*2. Baumaterial.* Radikalisch polymerisierbares Monomer (z.B. Acrylate, Methacrylate, Styrol, Styrolderivate, Vinylester, Vinylidenverbindungen, Diene und andere, sowie Mischungen aus diesen oder ähnlichen Verbindungen), versetzt mit einem Inhibitor (z.B. sterisch gehindertes Amin oder Phenol).
   *Badflüssigkeit:* Lösung eines Radikalbildners (Initiator) in einem Nichtlösungsmittel für das entstehende Polymer.. Bei dem Nichtlösungsmittel kann es sich auch um Wasser handeln. Die Aktivierung des Initiators erfolgt dadurch, dass die Badflüssigkeit auf eine geeignete Temperatur gebracht wird, bei der der Initiator langsam zerfällt und Radikale bildet Dabei wird der Initiator ständig verbraucht, so dass bei längeren Bauzeiten ständig Initiator zum Bad zugegeben werden muss. Wahlweise kann die Aktivierung des Initiators auch durch Belichten bei einer geeigneten Wellenlänge (z.B. im UV-Bereich) erfolgen. Auch in diesem Fall wird der Initiator ständig verbraucht und muss erneuert werden.
   *Funktionsweise:* Der Inhibitor im Baumaterial verhindert dessen vorzeitige Polymerisation und sorgt so für Lagerstabilität und Handhabbarkeit. Beim Kontakt mit der
   Badflüssigkeit wird die Polymerisation durch die beim lnitatorzerfall erzeugten, in geringer Konzentration im Bad vorhandenen Radikale initiiert. Zerfallsgeschwindigkeit des Initiators, Radikalkonzentration, Bauzeit und Polymerisationsgeschwindigkeit müssen aufeinander abgestimmt sein.
3. Wie 1. oder 2., jedoch sind zusätzlich Makromonomere im Baumaterial vorhanden, um den Molmassenaufbau und damit den Aufbau der mechanischen Festigkeit des
   Bauteils zu beschleunigen. In diesem Fall muss die Viskosität des Baumaterials auf die Anforderungen des Dosiersystems abgestimmt werden.
4. Wie 1., 2. oder 3., jedoch sind zusätzlich polyfunktionelle Monomere als Vernetzer im Baumaterial vorhanden. Hierfür kommen beispielsweise Divinylbenzol und seine Derivate, Bisacrylate oder Bismethacrylate, sowie auch die bekannten tri- und tetrafunktionellen Vernetzer und insbesondere auch geeignete funktionalisierte hochverzweigte Polymere, Dendrimere und andere dendritische Verbindungen (z.B. mit terminalen Acrylat- oder Methacrylatgruppen) in Frage.
5. *Baumaterial:* Polyfunktionelles Isocyanat oder Mischung von isocyanathaltigen Verbindungen, gegebenenfalls mit Lösungsmittel verdünnt.
   *Badflüssigkeit:* Wässrige Lösung eines Katalysators für die nucleophile Addition an Isocyanatgruppen, beispielsweise ein nicht-toxisches Amin wie DBU oder Phenylglycin.
   *Funktionsweise:* Beim Kontakt des Baumaterials mit dem wässrigen Bad hydrolysieren einige der Isocyanatgruppen unter Bildung von Aminogruppen, die dann mit weiteren Isocyanaten unter Bildung von Polyharnstoffen abreagieren, wodurch das
   Baumaterial aushärtet. Die Hydrolysegeschwindigkeit und die Geschwindigkeit, mit der die Poiyharnstoffketten aufgebaut werden, müssen durch die Kombination geeigneter Katalysatoren so aufeinander abgestimmt werden, dass die Tropfen vollständig härten können, die Polymerbildung also nicht zu schnell abläuft.
*6. Baumaterial:* Polyfunktionelles Isocyanat oder Mischung von isocyanathaltigen Verbindungen, gegebenenfalls mit Lösungsmittel verdünnt.
   *Badflüssigkeit:* Wässrige Lösung eines Biopolymers wie Stärke oder Gelatine mit nucleophilen funktionellen Gruppen.
   *Funktionsweise:* Beim Kontakt des Baumaterials mit dem Bad erfolgt durch Reaktion der Isocyanatgruppen mit den nucleophilen Seitengruppen des Biopolymers eine Vernetzung. Dadurch wird an den Stellen, an denen die Tropfen des Baumaterials in das Bad eingebracht werden, ein festes Polymernetzwerk erzeugt, aus dem eine Bauteil aufgebaut werden kann.
*7. Baumaterial:* Mono- oder polyfunktionelles Epoxid oder Mischung von verschiedenen Epoxiden, gegebenenfalls mit Lösungsmittel verdünnt.
   *Badflüssigkeit:* Wässrige Lösung von polyfunktionellen Aminen oder funktionalisierten Naturstoffen wie Stärke oder Gelatinelösungen, die nucleophile Funktionalitäten tragen.
   *Funktionsweise:* Das flüssige Baumaterial reagiert beim Einbringen in das Bad mit den Aminen bzw. den funktionalisierten Polymeren unter Öffnung der Epoxidringe und bildet so ein vernetztes Polymer.
*8. Baumaterial:* Alkoxysilane, bzw. Mischung aus Verbindungen mit einer oder mehreren Alkoxysilangruppen.
   *Badflüssigkeit:* Wasser bzw. wässrige Lösung.
   *Funktionsweise:* Beim Kontakt der Baumaterial-Tropfen mit dem Bad erfolgt eine Hydrolyse der Alkoxysilangruppen unter Abspaltung von Alkoholen. Die intermediär entstehenden Kieselsäurederivate kondensieren unter Wasserabspaltung zu SiO₂ bzw. im Fall von alkyl- oder arylsubstituierten Alkoxysilanen zu organisch modifiziertem SiO₂ oder auch zu Polysiloxanen, je nach Substitutionsgrad der Monomere bzw. Zusammensetzung der Monomermischung. Die Baumaterialien können nach dem Härten einen sehr weiten Bereich der Härte von harten, spröden SiO₂-basierenden anorganischen Materialien bis hin zu weichen, elastomeren Siliconen abdecken. Die Tropfengröße, die Polarität des Baumaterials und die Reaktionsgeschwindigkeit müssen so aufeinander abgestimmt werden, dass einerseits die äu-ßere Schicht nicht vollständig hydrolysiert wird, und andererseits auch im Inneren der Tropfen genügend Wasser für die Hydrolyse der Alkoxygruppen vorhanden ist.

Das Aufbringen der aufeinanderfolgenden Schichten des Baumaterials kann auf verschiedene Weise erfolgen. Einerseits ist es möglich, die jeweils oberste Schicht des Bauteils unterhalb der Badoberfläche zu halten, wobei der Abstand zwischen der obersten Schicht und der Badoberfläche die Dicke der nächsten Schicht bestimmen kann. Die neue Schicht Baumaterial wird tropfenweise so aufgebracht, dass die einzelnen Tropfen durch die Flüssigkeitsschicht auf die vorhergehende Baumaterialschicht auftreffen. Dabei beginnt die durch das Bad ausgelöste Polymerisation bereits beim Durchtreten der Tropfen durch die Flüssigkeitsschicht. In diesem Fall müssen die Polymerisationsgeschwindigkeit und Viskosität des Baumaterials sowie die Viskosität und Dichte des Bades durch die Zusammensetzung des Bades, der Monomermischung im Baumaterial, des Stabilisators im Baumaterial und des Initiators im Bad so aufeinander abgestimmt werden, dass die einzelnen Tropfen beim Auftreffen auf die vorhergehende Baumaterialschicht noch eine genügend gute Haftung untereinander sowie mit der vorhergehenden Schicht erzielen. Gleichzeitig muss sichergestellt sein, dass die Polymerisation nicht zu langsam erfolgt, da sonst die Gefahr besteht, dass die einzelnen Tropfen zu stark verfließen und keine definierten Kanten erzeugt werden können.

Andererseits kann das Aufbringen der jeweils nächsten Baumaterialschicht auch so geschehen, dass das Bauteil zunächst vollkommen in das Bad eingetaucht und anschließend von unten exakt an die Badoberfläche herangeführt wird. Dabei bildet sich eine Flüssigkeitsschicht auf dem Bauteil. Darauf werden die Tropfen deponiert. Das Bauteil wird nach dem Aufbringen jeder Schicht oder auch erst nach dem Aufbringen mehrerer Schichten vollständig in das Bad eingetaucht, um den Tropfen zunächst Zeit zu lassen, zu verfließen und Unebenheiten auszugleichen, und trotzdem eine gleichmäßige Polymerisation des Baumaterials zu erreichen. Die Anzahl der Schichten, die aufgebracht werden, bevor das Bauteil vollständig untergetaucht wird ("deep dip"), hat einen wesentlichen Einfluss auf die Baugeschwindigkeit und die Qualität der Schichten, insbesondere an denjenigen Stellen, die frei überhängend nur mit dem Bad als Stütze gebaut werden. Auch das Verfließen des Baumaterials in das Bad hinein kann durch das vollständige Untertauchen des Bauteils nach einer oder mehreren Schichten verhindert werden. Bevorzugt ist ein Untertauchen des Bauteils nach jeweils 1-5 Schichten.

Ein besonders bevorzugtes Verfahren gemäß der vorliegenden Erfindung ist in der WO 01/26885 beschrieben, auf deren Offenbarungsgehalt insoweit ausdrücklich Bezug genommen wird. Weitere besonders bevorzugte Verfahren sind die in den Ansprüchen 21 und 22 angegebenen erfindungsgemäßen Verfahren. Diese nehmen zwar auf die Verwendung von Kombinationen aus Baumaterial und Badflüssigkeit gemäß der vorliegenden Erfindung Bezug, jedoch versteht sich, dass die erfindungsgemäßen Verfahren auch mit beliebigen anderen geeigneten Kombinationen durchgeführt werden können.

Der Einsatz eines Bauverfahrens wie in der WO 01/78968 beschrieben, ist im erfindungsgemäßen Verfahren nicht möglich, da nach dem dortigen Verfahren die Austrittsöffnung(en) der Dosiervorrichtung immer unterhalb der Badoberfläche liegen müssen. Dies hätte bei Verwendung von Baumaterialien, wie sie in der vorliegenden Erfindung beschrieben werden, zur Folge, dass die Polymerisation bereits an den Austrittsöffnungen beginnt und diese somit verstopft würden.

In einem weiteren Aspekt der vorliegenden Erfindung werden dreidimensionale Modelle bereitgestellt, erhältlich mittels eines Verfahrens, vorzugsweise des in der WO 01/26885 oder in den Ansprüchen 21 und 22 beschriebenen Verfahrens, bei dem das Baumaterial computergesteuert schichtweise auf einer Unterlage an bestimmten Stellen in Form einzelner Tropfen deponiert und dort in Gegenwart der Badflüssigkeit chemisch verfestigt wird, wobei sich die Austrittsöffnung der Dosiervorrichtung vorzugsweise oberhalb der Badflüssigkeit befindet.

Ein weiterer Aspekt der vorliegenden Erfindung betrifft die Verwendung der erfindungsgemäßen Kombination aus Baumaterial und Badflüssigkeit zur Herstellung von dreidimensionalen Modellen bzw. Bauteilen und zur Herstellung von Bauteilen für Anwendungen im medizinischen Bereich.

Ein weiterer Aspekt der vorliegenden Erfindung betrifft ein Verfahren zur Herstellung von dreidimensionalen Bauteilen, wobei vorzugsweise das in der WO 01/26885 oder in den Ansprüchen 21 und 22 beschriebene Verfahren unter Verwendung der erfindungsgemäßen Kombination aus Baumaterial und Badflüssigkeit durchgeführt wird.

In einem weiteren Aspekt der vorliegenden Erfindung können die unter Verwendung der erfindungsgemäßen Kombination aus Baumaterial und Badflüssigkeit hergestellten dreidimensionalen Modelle bzw. Bauteile unterschiedliche Farben und/oder unterschiedliche mechanische Eigenschaften durch Verwendung von Baumaterialien und Badzusammensetzungen, denen Farbstoffe zugesetzt wurden, bzw. durch Verwendung von unterschiedlichen Baumaterialien und Badzusammensetzungen, die zu unterschiedlichen mechanischen Eigenschaften führen, besitzen.

Ein weiterer Aspekt der Erfindung betrifft die Nachbehandlung der Bauteile nach dem Herausnehmen aus der Badflüssigkeit. Beispielsweise können die Bauteile mit einer wässrigen Lösung oder mit Wasser gewaschen werden. Danach können sie getrocknet werden, wenn dies gewünscht wird. Auch eine Eigenschaftsverbesserung durch Fixieren (z.B. mit wasserbasierenden Lacken, Haarspray oder aus dem Künstlerbedarf bekannten Fixiersprays) ist möglich. Alternativ können die Bauteile auch mit einem thermisch oder photochemisch härtenden Harz infiltriert und durch Erwärmen oder Belichten ausgehärtet werden. Die Oberflächen können durch Schleifen oder Lackieren veredelt werden.

### Beispiele

Für die folgenden Beispiele soll darauf hingewiesen werden, dass nicht jedes Baumaterial (Tinte) mit jeder Badflüssigkeit und jedem Verfahren kombiniert werden kann. Die Beispiele geben geeignete Kombinationen an. Vorstehend wird eine allgemeine Formulierung mit bevorzugten Variationsbereichen angegeben. Die Prozentangaben beziehen sich auf das Gewicht:

### Allgemeines Ausführungbeispiel:

Als Basis für das Baumaterial dienen 60 - 99% eines niederviskosen Methyl-, Ethyl- oder Butylcyanacrylats. Dazu kommen 0,5 bis 5% einer organischen Carbon-, Sulfon- oder Phosphonsäure als Stabilisator. Als Comonomer werden 0-20 % 2-Methoxyethylcyanacrylat, 0-15% Lactid, 0-10% ε-Caprolacton, 0-5% Maleinsäureanhydrid und/oder 0-5% eines geeigneten Glycidylesters oder -ethers zugegeben. U. U. werden noch 0-2% Tensid und 0-2% Farbstoff zugegeben.
Das Bad besteht aus einer wässrigen Lösung von 0,5 bis 5% Natriumhydroxid, 0-20% Polyethylenglykol einer Molmasse zwischen 300 und 1000 und 0-3% eines oder mehrerer Tenside. Ggf. wird die Dichte durch Zugabe von 0-20% eines Salzes oder einer wasserlöslichen organischen Substanz erhöht.
Die Deposition kann so erfolgen, dass das Bauteil sich dabei knapp unter der Badoberfläche befindet. In diesem Fall wird das Bauteil nach der Deposition jeder Schicht um eine Schichthöhe abgesenkt. (Im Folgenden Druckverfahren 1)
Eine andere Möglichkeit besteht darin, eine neue Schicht des Baumaterials aufzubringen, während sich die Bauteiloberfläche 10 bis 700 µm oberhalb des Bades befindet. Dann muss das Bauteil jedoch nach Auftrag von 1-5 Schichten vollständig unter die Badoberfläche abgesenkt und dann wieder so angehoben werden, dass es sich wieder 10-700 µm oberhalb der Badoberfläche befindet. Dabei fließt die Badflüssigkeit nach dem Auftauchen wieder ab, so dass die Oberfläche noch leicht feucht ist. (Im Folgenden Druckverfahren 2).
Nach Beendigung des Druckvorgangs empfiehlt es sich, das Bauteil einige Minuten in verdünnter Zitronensäurelösung zu waschen und dann zu Trocknen. Eine Nachbehandlung mit einem handelsüblichen Klarlack ist ggf. vorteilhaft um härtere und glattere Oberflächen zu erzielen.

### Spezielle Beispiele

### Beispiel 1:

In einem niederviskosen Ethylcyanacrylat (91%) werden Ethansulfonsäure (5%), Dodecyldimethyl(3-suffopropyl)ammoniumhydroxid (2%) und Methacrylsäureglycidylester (2%) gelöst.
Als Badflüssigkeit wird eine Lösung von Polyethylenglykol (MG = 400; 5 %) und Natriumiaurylsulfonat (1,0 %) in 1%iger Natronlauge (wässrige Natriumhydroxidlösung) verwandt.
Die Deposition erfolgt wie im allgemeinen Beispiel als Druckverfahren 1 beschrieben. Da die Formulierung wenig verfließt, können feine Strukturen abgebildet werden.

### Beispiel 2:

In einem niederviskosen Ethylcyanacrylat (91%) werden Ethansulfonsäure (5%), Dodecyldimethyl(3-sulfopropyl)ammoniumhydroxid (2%) und Methacrylsäureglycidylester (2%) gelöst.
Als Badflüssigkeit wird eine Lösung von Polyethylenglykol (MG = 400; 5 %) und Natriumlaurylsulfonat (1,0 %) in 1%iger Natronlauge (wässrige Natriumhydroxidlösung) verwandt.
Die Deposition erfolgt, wie im allgemeinen Ausführungsbeispiel als Druckverfahren 2 beschrieben. Nach dem Trocknen wird das Bauteil mit einem handelsüblichen Klarlack besprüht. Auf diese Art kann eine glättere und festere Oberfläche erhalten werden. Diese Oberflächenfestigkeit bleibt über mehrere Wochen erhalten.

### Beispiel 3:

In ein niederviskoses Ethylcyanacrylat (80%) werden 12% 2-Methoxyethylcyanacrylat, 7% Lactid und 1% Ameisensäure eingemischt. Als Badflüssigkeit wird eine Lösung von Polyethylenglykol (MG = 400; 5%) in 1%iger Natronlauge verwandt. Die Deposition erfolgt wie im allgemeinen Ausführungsbeispiel als Druckverfahren 2 beschrieben.

### Beispiel 4:

In ein niederviskoses Ethylcyanacrylat (82,5%) werden 15% 2-Methoxyethylcyanacrylat, 1 % Kristallviolett und 1,5% Vinylphosphonsäure eingemischt. Als Badflüssigkeit wird eine Lösung von Polyethylenglykol (MG = 400; 5 %) in 1%iger Natronlauge verwandt. Die Deposition erfolgt wie im allgemeinen Ausführungsbeispiel als Druckverfahren 2 beschrieben. Es werden violette Bauteile erhalten. Die mechanischen Eigenschaften der Bauteile entsprechen denen aus ungefärbtem Baumaterial.

### Beispiel 5:

In ein niederviskoses Ethylcyanacrylat (82,5%) werden 13 % 2-Methoxyethylcyanacrylat, 2% Methacrylsäureglycidylester, 1% Rhodamin B und 1,5% Ethansulfonsäure eingemischt. Als Badflüssigkeit wird eine Lösung von Polyethylenglykol (MG = 400; 5%) und Laurylsulfonsäure Natriumsalz (2%) in 1%iger Natronlauge verwandt. Die Deposition erfolgt wie im allgemeinen Ausführungsbeispiel als Druckverfahren 2 beschrieben. Die Bauteile sind rosafarben. Die mechanischen Eigenschaften der Bauteile entsprechen denen aus ungefärbtem Baumaterial.

### Beispiel 6:

In einem niederviskosen Ethylcyanacrylat (94%) werden 2% Methacrylsäureglycidylester, 1 % Butandioldiglycidylether und 3% Ethansulfonsäure gelöst. Als Badflüssigkeit dient eine Lösung aus 5% Polyethylenglykol (MG = 400), 3,5% Natriumlaurylsulfonat und 0,2% eines fluorierten aliphatischen Polyesters (Handelsname Fluorad FC 4430). Die Deposition erfolgt wie im allgemeinen Beispiel als Druckverfahren 2 beschrieben.

### Beispiel 7:

### Erhöhte Stabilität durch Lactid

Polyethylcyanacrylat wird unter Einfluß starker Basen hydrolysiert. Dieser Abbau fällt schon in einem sehr frühen Stadium durch die Verfärbung der Polymere über gelb nach blutrot auf. Er ist außerdem mit einem Masseverlust verbunden. Bei 2stündigen Rühren von 500 mg reinem Poylethylcyanacrylat in 10%iger Natriumhydroxidlösung wird ein Masseverlust von 33% beobachtet.

Mischt man 85 Gew.-% Ethylcyanacrylat mit 15 Gew.-% Dilactid, polymerisiert diese Mischung unter denselben Bedingungen wie das reine Ethylcyanacrylat oben und behandelt man das so hergestellte Polymer ebenfalls 2 Stunden mit 10%iger Natriumhydroxidlösung, beträgt der Masseverlust nur 26%.

### Beispiel 8:

Durch Zugabe von Glycidylverbindungen können die mechanischen Eigenschaften (Zähigkeit) des Polycyanacrylates, das bei dem beschriebenen Rapid-Prototyping-Verfahren gebildet wird, verbessert werden. Die Auswahl der richtigen Menge an Comonomer ist wesentlich, wie folgende Versuche zeigen:
Mischung 1: Mischt man 90 Gew.-% Ethylcyanacrylat, 3 Gew.-% Ethansulfonsäure (Stabilisator) und 7 Gew.-% Butandioldiglycidylether, wird die Mischung innerhalb von 24 Stunden fest.
Mischung 2: Mischt man hingegen 95 Gew.-% Ethylcyanacrylat, 3 Gew.-% Ethansulfonsäure (Stabilisator) und 2 Gew.-% Butandioldiglycidylether ist die resultierende Mischung unter Licht- und Feuchtigkeitsausschluß bis zu 1 Jahr lagerfähig, ohne dass sich die Viskosität merklich verändert. Anschließend kann die Mischung immer noch polymerisiert werden.
Sowohl Mischung 1 als auch Mischung 2 können mit dem beschriebenen Verfahren zu Bauteilen verdruckt werden, wobei die Druckfähigkeit von Mischung 1 nur ca. 1 Stunde anhält, während Mischung 2 auch nach einem Jahr noch ohne Qualitätsverlust verdruckt werden kann.

## Patentansprüche

1. Kombination aus mindestens einem Baumaterial und einer Badflüssigkeit für ein Verfahren zum direkten Ausdrucken von Bauteilen und Modellen, **dadurch gekennzeichnet, dass**
das Baumaterial mindestens eine niederviskose Monomer- oder Oligomerverbindung mit einer Viskosität < 200 mPa·s enthält, die in Kontakt mit einer Badflüssigkeit durch Polymerisation mindestens einer Komponente polymerisiert, und
die Badflüssigkeit aus einer wässrigen Lösung besteht, die einen Initiator enthält, der die Polymerisation zumindest eines Bestandteils des Baumaterials initiiert,
wobei das Baumaterial ein Cyanacrylat der allgemeinen Formel CH₂=C(CN)COOR, eine Mischung aus Cyanacrylaten oder eine Mischung von einem oder mehreren Cyanacrylat(en) mit weiteren anionisch polymerisierbaren Verbindungen enthält, wobei der Rest R lineare oder verzweigte, ein- oder mehrfach substituierte oder unsubstituierte, aliphatische, cycloaliphatische oder olefinische Gruppen mit 1-10 C-Atomen, ein- oder mehrfach substituierte oder unsubstituierte Aromaten mit 6-18 C-Atomen und gesättigte, ungesättigte und aromatische 3- bis 7-gliedrige heterocyclische Gruppen mit einem oder mehreren Heteroatom(en) unabhängig voneinander ausgewählt aus N, S, O und P, die mit einem oder mehreren Substituenten substituiert sein können, wobei die Substituenten ausgewählt sind aus Halogen (F, Cl, Br, I), Hydroxy, Oxo, Cyano, C1-8-Alkoxy, Amino, Mono- oder Di(C1-8)alkylamino, Nitro, Mercapto und -S(O)n(C1-8)-Alkyl (n= 0, 1, 2), umfasst
und die Badflüssigkeit eine basische wässrige Lösung ist.

2. Kombination nach Anspruch 1, wobei das Baumaterial und/oder die Badflüssigkeit weitere Additive enthält.

3. Kombination nach Anspruch 1 oder 2, wobei das Cyanacrylat Methylcyanacrylat, Ethylcyanacrylat, Butylcyanacrylat oder 2-Methoxyethylcyanacrylat oder eine Kombination davon ist.

4. Kombination nach einem der Ansprüche 1 bis 3, wobei die weiteren anionisch polymerisierbaren Verbindungen ausgewählt sind aus der Gruppe umfassend cyclische Ester, cyclische Anhydride und Epoxide.

5. Kombination nach Anspruch 4, wobei der cyclische Ester 3,6-Dimethyl-1,4-dioxan-2,5-dion, das cyclische Anhydrid Maleinsäureanhydrid und das Epoxid Glycidylmethacrylat oder Butandioldiglycidylether ist.

6. Kombination nach einem der Ansprüche 1 bis 5, wobei die basische wässrige Lösung ausgewählt ist aus der Gruppe der wässrigen Alkali- oder Erdalkalihydroxidlösungen oder Alkaliphosphatlösungen, der Gruppe der wässrigen Aminlösungen oder der Gruppe der basischen Pufferlösungen.

7. Kombination nach Anspruch 6, wobei die basische wässrige Lösung ausgewählt ist aus Natriumhydroxidlösungen (0,05 bis 5%ig), Natriumcarbonatlösungen (5 bis 10%ig), wässrigen Lösungen von Lysin, Guanidiniumsalzen oder Phenylglycin sowie Phosphatpufferlösungen.

8. Kombination nach einem der Ansprüche 1 bis 7, wobei das Baumaterial einen sauren Stabilisator oder einen Stabilisator, der bei Kontakt mit Wasser saure Verbindungen ergibt, enthält.

9. Kombination nach Anspruch 8, wobei der Stabilisator ausgewählt ist aus der Gruppe umfassend Sulfonsäuren, Carbonsäuren, organische Phosphonsäuren, Schwefeldioxid und Chlorwasserstoff.

10. Kombination nach Anspruch 9, wobei der Stabilisator Methansulfonsäure, Ethansulfonsäure, Toluolsulfonsäure, Ameisensäure oder Vinylphosphonsäure ist.

11. Kombination nach einem der Ansprüche 1 bis 10, wobei die Additive im Baumaterial ausgewählt sind aus der Gruppe umfassend grenzflächenaktive Verbindung wie Laurylsulfonsäure-Natriumsalz, Dodecyldimethyl(3-sulfopropyl)ammoniumhydroxid und perfluorierte aliphatische Polyester.

12. Kombination nach einem der Ansprüche 1 bis 11, wobei die Additive im Bad ausgewählt sind aus der Gruppe umfassend Verbindungen zur Einstellung der Viskosität und Polarität wie Ethylenglykol, Glyzerin, Poly(ethylenglykol), Poly(propylenglykol), Poly(ethylenglykol-co-propylenglykol), Poly(hydroxyethylacrylat), Poly(ethylenimin), Polysaccharide wie Stärke, Zuckerderivate, Polypeptide wie Gelatine, Verbindungen zur Einstellung der Oberflächenspannung, Dichte, lonenstärke und des pH-Wertes wie Aminosäuren, Salze wie Natriumchlorid, Calciumchlorid, oberflächenaktive Substanzen wie Laurylsulfonsäure-Natriumsalz, Ester von Sulfobernsteinsäure-Natriumsalz, Acrylsäure und Polyacrylsäure.

13. Kombination nach einem der Ansprüche 1 bis 12, wobei das Baumaterial oder die Badflüssigkeit weitere Substanzen zur Verbesserung der mechanischen Eigenschaften des erhaltenen Polymers enthält.

14. Kombination nach Anspruch 13, wobei das Baumaterial mindestens eine niederviskose multifunktionelle Verbindung mit einer Viskosität < 200 mPa·s als Vernetzer enthält, und
die Badflüssigkeit oligomere oder polymere Verbindungen enthält, die durch Reaktion mit dem Baumaterial ein verzweigtkettiges oder vernetztes Polymer aufbauen.

15. Kombination nach einem der Ansprüche 1 bis 14, wobei das Baumaterial oder die Badflüssigkeit biochemisch aktive Substanzen zur Beeinflussung der Eigenschaften des erhaltenen Polymers enthält.

16. Kombination nach einem der Ansprüche 13 bis 15, wobei diese Substanzen zumindest teilweise ebenfalls polymerisieren.

17. Kombination nach Anspruch 16, wobei die Substanzen anionisch polymerisieren.

18. Kombination nach einem der Ansprüche 1 bis 17, wobei durch die Zugabe von Farbstoffen oder Pigmenten zu dem Baumaterial und/oder der Badflüssigkeit farbige Bauteile erhalten werden.

19. Kombination nach einem der Ansprüche 1 bis 18, wobei die Dichte der Badflüssigkeit beim etwa 0,95 bis 1,15-fachen der Dichte des Baumaterials liegt, so dass durch den Auftrieb freitragende Strukturen hergestellt werden können, die beim Absenken des Bauteils unter die Flüssigkeitsoberfläche nicht zerstört werden.

20. Verwendung einer Kombination nach einem der Ansprüche 1 bis 19 in einem Rapid-Prototyping-Verfahren zur Herstellung eines Bauteils mit den Schritten:
a) Fertigen einer Bauteilschicht auf einer Bauunterlage durch selektives Auftragen von Baumaterial mittels Drop-on-Demand-Technik,
b) Verfüllen von Ausnehmungen in der Bauteilschicht durch Auftragen einer eine höhere Dichte als das Baumaterial aufweisenden Supportflüssigkeit (Badflüssigkeit) derart, dass die Oberseite der Bauteilschicht und die Supportflüssigkeit eine bündige Oberfläche bilden,
c) Fertigen einer Bauteilschicht auf der bündigen Oberfläche der vorangehenden Schicht durch selektives Auftragen von Baumaterial mittels Drop-on-Demand-Technik, wobei in den von Supportflüssigkeit gebildeten Bereichen der Oberfläche das Baumaterial in einer solchen Abfolge aufgetragen wird, dass es jeweils seitlich an bereits aufgetragen Teile der Bauteilschicht angebaut wird,
d) Fertigen weiterer Schichten jeweils durch Wiederholen der Schritte b) und c), und
e) Trennen des Bauteils von der Supportflüssigkeit.

21. Verwendung einer Kombination nach einem der Ansprüche 1 bis 19 in einem Rapid-Prototyping-Verfahren zur Herstellung eines Bauteils mit den Schritten:
a) Fertigen einer oder mehrerer Bauteilschichten, bevorzugt 1-5 Schichten, auf einer Bauunterlage durch selektives Auftragen von Baumaterial mittels Drop-on-Demand-Technik, wobei sich die Bauunterlage in einer Badflüssigkeit befindet, so dass die Oberfläche der Bauunterlage 10-700µm oberhalb der Oberfläche der Badflüssigkeit liegt,
b) Absenken der Bauunterlage soweit, dass die oberste Bauteilschicht vollständig unter die Badoberfläche abgesenkt wird,
c) Anheben der Bauunterlage soweit, dass die oberste Bauteilschicht erneut 10-700µm oberhalb der Oberfläche der Badflüssigkeit liegt, wobei Ausnehmungen in der obersten Bauteilschicht durch die Badflüssigkeit gefüllt werden,
d) Fertigen weiterer Bauteilschichten (bevorzugt 1-5 Schichten) durch selektives Auftragen von Baumaterial mittels Drop-on-Demand-Technik, wobei die neue(n) Bauteilschicht(en) auch über den von den vorherigen Schichten gebildeten Bereich hinausgehen können und die nicht auf vorherigen Bauteilschichten aufgebrachten Teile der neuen Schicht(en) durch die Badflüssigkeit gestützt werden,
e) Fertigen weiterer Schichten jeweils durch Wiederholen der Schritte b), c) und d), und
f) Trennen des Bauteils von der Badflüssigkeit.

22. Verwendung einer Kombination nach einem der Ansprüche 1 bis 19 in einem Rapid-Prototyping-Verfahren zur Herstellung eines Bauteils mit den Schritten:
a) Fertigen einer Bauteilschicht auf einer Bauunterlage durch selektives Auftragen von Baumaterial mittels Drop-on-Demand-Technik, wobei sich die Bauunterlage in einer Badflüssigkeit befindet, so dass die Oberfläche der Bauunterlage eine Schichtdicke unterhalb der Oberfläche der Badflüssigkeit liegt,
b) Absenken der Bauunterlage um eine Schichtdicke,
c) Fertigen einer weiteren Bauteilschicht durch selektives Auftragen von Baumaterial mittels Drop-on-Demand-Technik, wobei die neue(n) Bauteilschicht(en) auch über den von den vorherigen Schichten gebildeten Bereich hinausgehen können und die nicht auf vorherigen Bauteilschichten aufgebrachten Teile der neuen Schicht(en) durch die Badflüssigkeit gestützt werden,
d) Fertigen weiterer Schichten jeweils durch Wiederholen der Schritte b) und c), und
e) Trennen des Bauteils von der Badflüssigkeit.

23. Verwendung nach einem der Ansprüche 20 bis 22, wobei durch die Verwendung von verschiedenen Kombinationen aus Baumaterial und Badflüssigkeit Bauteile mit unterschiedlichen mechanischen Eigenschaften erhalten werden.

24. Verwendung nach einem der Ansprüche 20 bis 22, wobei durch die Verwendung von Farbstoffen oder Pigmenten in Baumaterial und/oder Badflüssigkeit Bauteile mit unterschiedlichen Farben erhalten werden.

25. Bauteil erhalten nach einem in den Ansprüchen 20 bis 24 beschriebenen Verfahren.

26. Bauteil hergestellt aus einer der Kombinationen von Baumaterial und Badflüssigkeit entsprechend einem der Ansprüche 1-19.

27. Verwendung einer Kombination aus Baumaterial und Badflüssigkeit nach einem der Ansprüche 1 bis 19 zur Herstellung von dreidimensionalen Bauteilen.

28. Verwendung einer Kombination aus Baumaterial und Badflüssigkeit nach einem der Ansprüche 1 bis 19 zur Herstellung von Bauteilen für Anwendungen im medizinischen Bereich.

## Claims

1. Combination of at least one building material and a bath fluid for a method for directly printing elements and models **characterized in that**
the building material contains at least one low-viscosity monomeric or oligomeric compound having a viscosity < 200 mPa·s, which polymerises in contact with the bath fluid by the polymerisation of at least one component, and the bath fluid consists of an aqueous solution containing an initiator, which initiates the polymerisation of at least one ingredient of the building material,
wherein the building material contains a cyanoacrylate represented by the general formula CH₂=C(CN)COOR, a mixture of cyanoacrylates or a mixture of one or more cyanoacrylate(s) with additional anionically polymerisable compounds, wherein the residue R comprises linear or branched, monosubstituted, polysubstituted or unsubstituted, aliphatic, cycloaliphatic or olefinic groups having 1 to 10 carbon atoms, monosubstituted, polysubstituted or unsubstituted aromatic groups having 6 to 18 carbon atoms and saturated, unsaturated and aromatic, 3- to 7-membered heterocyclic groups having one or more heteroatom(s) independently selected from N, S, O and P, which may be substituted by one or more substituents(s) selected from halogen (F, Cl, Br, l), hydroxyl, oxo, cyano, C₁₋₈-alkoxy, amino, mono or di(C₁₋₈)alkylamino, nitro, mercapto and -S(O)n(C₁₋₈)-alkyl (n=0, 1, 2)
and the bath fluid is a basic aqueous solution.

2. Combination according to claim 1, wherein the building material and/or the bath fluid contains further, additives.

3. Combination according to claim 1 or 2, wherein the cyanoacrylate is methyl cyanoacrylate, ethyl cyanoacrylate, butyl cyanoacrylate or 2-methoxyethyl cyanoacrylate or a combination thereof.

4. Combination according to any one of claims 1 to 3, wherein the additional anionically polymerisable compounds are selected from the group comprising cyclic esters, cyclic anhydrides and epoxides.

5. Combination according to claim 4, wherein the cyclic ester is 3,6-dimethyl-1,4-dioxane-2,5-dione, the cyclic anhydride is maleic anhydride and the epoxide is glycidyl methacrylate or butanediol diglycidyl ether.

6. Combination according to any one of claims 1 to 5, wherein the basic aqueous solution is selected from the group of aqueous alkaline or alkaline earth metal hydroxide solutions or alkaline metal phosphate solutions, the group of aqueous amine solutions or the group of basic buffer solutions.

7. Combination according to claim 6, wherein the basic aqueous solution is selected from sodium hydroxide solutions (0.05 to 5%), sodium carbonate solutions (5 to 10%), aqueous solutions of lysine, guanidinium salts or phenyl glycine and phosphate buffer solutions.

8. Combination according to any one of claims 1 to 7, wherein the building material contains an acidic stabilizer or a stabilizer leading to acidic compounds, when contacted with water.

9. Combination according to claim 8, wherein the stabilizer is selected from the group comprising sulfonic acids, carboxylic acids, organic phosphonic acids, sulfur dioxide and hydrogen chloride.

10. Combination according to claim 9, wherein the stabilizer is methane sulfonic acid, ethane sulfonic acid, toluene sulfonic acid, formic acid or vinyl phosphonic acid.

11. Combination according to any one of claims 1 to 10, wherein the additives in the building material are selected from the group comprising surface-active compounds such as the sodium salt of lauryl sulfonic acid, dodecyl dimethyl (3-sulfopropyl)ammonium hydroxide and perfluorinated aliphatic polyesters.

12. Combination according to any one of claims 1 to 11, wherein the additives in the bath are selected from the group comprising compounds for adjusting the viscosity and the polarity such as ethylene glycol, glycerol, poly(ethylene glycol), poly(propylene glycol), poly(ethylene glycol-co-propylene glycol), poly(hydroxyethyl acrylate), poly(ethylene imine), polysaccharides such as starch, sugar derivatives, polypeptides such as gelatine, compounds for adjusting the surface tension, the density, the ionic strength and the pH such as amino acids, salts such as sodium chloride, calcium chloride, surface-active substances such as the sodium salt of lauryl sulfonic acid, esters of the sodium salt of sulfosuccinic acid, acrylic acid and poly(acrylic acid).

13. Combination according to any one of claims 1 to 12, wherein the building material or the bath fluid contains additional substances to improve the mechanical properties of the polymer obtained.

14. Combination according to claim 13, wherein the building material contains at least one low-viscosity multifunctional compound having a viscosity < 200 mPa·s as a crosslinking agent and the bath fluid contains oligomeric or polymeric compounds forming a branched-chain or crosslinked polymer by reacting with the building material.

15. Combination according to any one of claims 1 to 14, wherein the building material or the bath fluid contains biochemically active substances to influence the properties of the polymer obtained.

16. Combination according to any one of claims 13 to 15, wherein these substances also polymerize at least partially.

17. Combination according to claim 16, wherein these substances polymerize anionically.

18. Combination according to any one of claims 1 to 17, wherein coloured elements are obtained by adding dyes or pigments to the building material and/or to the bath fluid.

19. Combination according to any one of claims 1 to 18, wherein the density of the bath fluid amounts to about 0.95 to 1.15 times the density of the building material, so that self-supporting structures can be produced due to the buoyant force, which are not destroyed by lowering the element below the surface of the fluid.

20. Use of a combination according to any one of claims 1 to 19 in a rapid prototyping method for the production of an element having the steps of:
a) producing an element layer on a building support by selectively applying building material by means of a drop-on-demand technique
b) filling recesses in the element layer by applying support fluid (bath fluid) having a density higher than that of the building material in such a way that the upper side of the element layer and the support fluid form an aligned surface,
c) producing an element layer on the aligned surface of the preceding layer by selectively applying building material by means of a drop-on-demand technique, the building material being applied in the surface areas formed by support fluid in such a sequence that it is added laterally to the parts of the element layer already applied,
d) producing further layers by repeating steps (b) and (c), each time, and
e) separating the element from the support fluid.

21. Use of a combination according to any one of claims 1 to 19 in a rapid prototyping method for the production of an element having the steps of:
a) producing one or more element layers, preferably 1 to 5 layers, on a building support by selectively applying building material by means of a drop-on-demand technique, the building support being positioned in a bath fluid in such a way that the surface of the building support is 10 to 700 µm above the surface of the bath fluid,
b) lowering the building support, until the top layer of the element is completely lowered below the bath surface,
c) raising the building support, until the top layer of the element is 10 to 700 µm above the surface of the bath fluid, with recesses in the top layer of the element being filled by the bath fluid,
d) producing further element layers (preferably 1 to 5 layers) by selectively applying building material by means of a drop-on-demand technique, wherein the new element layer(s) can also exceed the area formed by the preceding layers and wherein the parts of the new layer(s) not applied on the preceding element layers are supported by the bath fluid,
e) producing further layers by repeating the steps (b), (c), and (d), each time, and
f) separating the element from the bath fluid.

22. Use of a combination according to any one of claims 1 to 19 in a rapid prototyping method for the production of an element having the steps of:
a) producing an element layer on a building support by selectively applying building material by means of a drop-on-demand technique, the building support being positioned in a bath fluid in such a way that the surface of the building support is positioned one layer thickness below the surface of the bath fluid,
b) lowering the building support by one layer thickness,
c) producing a further element layer by selectively applying building material by means of a drop-on-demand technique, wherein the new element layer(s) can also exceed the area formed by the preceding layers and wherein the parts of the new layer(s) not applied on the preceding element layers are supported by the bath fluid,
d) producing further layers by repeating steps (b) and (c), each time, and
e) separating the element from the bath fluid.

23. Use according to any one of claims 20 to 22, wherein elements having different mechanical properties are obtained by using different combinations of building material and bath fluid.

24. Use according to any one of claims 20 to 22, wherein elements having different colours are obtained by using dyes or pigments in the building material and/or in the bath fluid.

25. Element obtained by a method described in claims 20 to 24.

26. Element produced from one of the combinations of building material and bath fluid according to any one of claims 1 to 19.

27. Use of a combination of building material and bath fluid according to any one of claims 1 to 19 for the production of three-dimensional elements.

28. Use of a combination of building material and bath fluid according to any one of claims 1 to 19 for the production of elements for applications in the field of medicine.

## Revendications

1. Combinaison d'au moins un matériau de construction et d'un liquide de bain pour un procédé de tirage direct de pièces de construction et de modèles, **caractérisée en ce que**
le matériau de construction comprend au moins un composé monomérique ou oligomérique d'une viscosité faible, < 200 mPa·s, qui polymérise en contact avec un liquide de bain par polymérisation d'au moins un composant, et
le liquide de bain se compose d'une solution aqueuse, qui contient un initiateur, qui initie la polymérisation au moins d'un ingrédient du matériau de construction,
dans laquelle le matériau de construction comprend un cyanoacrylate de formule générale CH₂=C (CN) COOR, un mélange de cyanoacrylates ou un mélange d'un ou de plusieurs cyanoacrylates avec d'autres composés polymérisables anioniquement, où le résidu R comprend des groupes linéaires ou ramifiés, mono- ou polysubstitués ou non substitués, aliphatiques, cycloaliphatiques ou oléfiniques ayant de 1 à 10 atomes de C, des aromates mono- ou polysubstitués ou non substitués, ayant de 6 à 18 atomes de C et des groupes hétérocycliques de 3 à 7 chaînons saturés, insaturés et aromatiques ayant un ou' plusieurs hétéroatomes choisis indépendamment les uns des autres parmi N, S, O et P, qui peuvent être substitués par un ou plusieurs substituants, où les substituants sont choisis parmi les groupes halogène (F, C1, Br, I), hydroxy, oxo, cyano, alcoxy en C₁₋₈, amino, mono- ou di(C₁₋₈)alkylamino, nitro, mercapto et -S(O)ₙ(C₁₋₈)-alkyl(n=0, 1, 2),
et le liquide de bain est une solution aqueuse basique.

2. Combinaison selon la revendication 1, dans laquelle le matériau de construction et/ou le liquide de bain comprend d'autres additifs.

3. Combinaison selon la revendication 1 ou 2, dans laquelle le cyanoacrylate est le cyanoacrylate de méthyle, le cyanoacrylate d'éthyle, le cyanoacrylate de butyle ou le cyanoacrylate de 2-méthoxyéthyle ou une combinaison de ceux-ci.

4. Combinaison selon l'une des revendications 1 à 3, dans laquelle les autres composés polymérisables anioniquement sont choisis dans le groupe comprenant les esters cycliques, les anhydrides cycliques et les époxydes.

5. Combinaison selon la revendication 4, dans laquelle l'ester cyclique est la 3,6-diméthyl-1,4-dioxane-2,5-dione, l'anhydride cyclique est l'anhydride d'acide maléique et l'époxyde est le méthacrylate de glycidyle ou le diglycidyléther de butanediol.

6. Combinaison selon l'une des revendications 1 à 5, dans laquelle la solution aqueuse basique est choisie dans le groupe constitué par les solutions aqueuses d'hydroxyde d'alcalin ou d'alcalino-terreux ou de phosphate d'alcalin, le groupe constitué des solutions d'amine aqueuses ou le groupe des solutions tampons basiques.

7. Combinaison selon la revendication 6, dans laquelle la solution aqueuse basique est choisie parmi les solutions d'hydroxyde de sodium (à un taux de 0,05 à 5 %), les solutions de carbonate de sodium (à un taux de 5 à 10 %), les solutions aqueuses de lysine, les sels de guanidinium ou la phénylglycine ainsi que les solutions tampons de phosphate.

8. Combinaison selon l'une des revendications 1 à 7, dans laquelle le matériau de construction comprend un stabilisant acide ou un stabilisant qui donne des composés acides au contact de l'eau.

9. Combinaison selon la revendication 8, dans laquelle le stabilisant est choisi dans le groupe comprenant les acides sulfoniques, les acides carboxyliques, les acides phosphoniques organiques, le dioxyde de soufre et le chlorure d'hydrogène.

10. Combinaison selon la revendication 9, dans laquelle le stabilisant est l'acide méthanesulfonique, l'acide éthanesulfonique, l'acide toluènesulfonique, l'acide formique ou l'acide vinylphosphonique.

11. Combinaison selon l'une des revendications 1 à 10, dans laquelle les additifs du matériau de construction sont choisis dans le groupe comprenant un composé tensioactif comme le sel sodique d'acide laurylsulfonique, l'hydroxyde de dodécyldiméthyl(3-sulfopropyl)ammonium et les polyester aliphatiques perfluorés.

12. Combinaison selon l'une des revendications 1 à 11, dans laquelle les additifs du bain sont choisis dans le groupe comprenant des composés régulateurs de viscosité et de polarité comme l'éthylène glycol, la glycérine, le poly(éthylène glycol), le poly(propylène glycol), le poly(éthylène glycol-co-propylène glycol), le poly(acrylate d'hydroxyéthyle), la poly(éthylènimine), des polysaccharides comme les amidons, les dérivés de sucre, des polypeptides comme les gélatines, des composés pour réguler la tension de surface, la densité et la force ionique et le pH comme les acides aminés, des sels comme le chlorure de sodium, le chlorure de calcium, les substances tensioactives comme le sels sodique d'acide laurylsulfonique, les esters de sel sodique d'acide sulfosuccinique, l'acide acrylique et l'acide polyacrylique.

13. Combinaison selon l'une des revendications 1 à 12, dans laquelle le matériau de construction ou le liquide de bain comprend d'autres substances pour améliorer les propriétés mécaniques du polymère obtenu.

14. Combinaison selon la revendication 13, dans laquelle le matériau de construction contient au moins un composé multifonctionnel ayant une viscosité faible < 200 mPa·s, à titre de réticulant, et
le liquide de bain comprend des composés oligomères ou polymères qui forment un polymère à chaîne ramifiée ou réticulée avec le matériau de construction par réaction.

15. Combinaison selon l'une des revendications 1 à 14, dans laquelle le matériau de construction ou le liquide de bain comprend des substances actives biochimiquement pour moduler les propriétés du polymère obtenu.

16. Combinaison selon l'une des revendications 13 à 15, dans laquelle ces substances polymérisent également au moins partiellement.

17. Combinaison selon la revendication 16, dans laquelle les substances polymérisent anioniquement.

18. Combinaison selon l'une des revendications 1 à 17, dans laquelle des pièces de construction colorées sont obtenues par addition de colorants ou de pigments au matériau de construction et/ou au liquide de bain.

19. Combinaison selon l'une des revendications 1 à 18, dans laquelle la densité du liquide de bain se situe aux environs de 0,95 à 1,15 fois la densité du matériau de construction, si bien que l'on peut fabriquer des structures autoporteuses, qui ne sont pas détruites lors de l'abaissement de la pièce de construction en dessous de la surface du liquide, par la poussée d'Archimède.

20. Utilisation d'une combinaison selon l'une des revendications 1 à 19 dans un procédé de phototypage rapide pour la fabrication d'une pièce de construction, comprenant les étapes de :
a) confection d'une couche de pièce de construction sur un substrat de construction par le dépôt sélectif du matériau de construction au moyen de la technique goutte à la demande,
b) remplissage des cavités dans la couche de pièce de construction par dépôt d'un liquide support (liquide de bain) présentant une densité plus élevée que le matériau de construction de sorte que la face supérieure de la couche de pièce de construction et le liquide support forment une surface solidaire,
c) confection d'une couche de pièce de construction sur la surface solidaire de la couche précédente par dépôt sélectif du matériau de construction au moyen de la technique goutte à la demande, le matériau de construction étant déposé dans les zones de la surface formées par le liquide support dans un ordre tel qu'il s'accumule à chaque fois latéralement aux pièces de couche de pièce de construction déjà déposées,
d) confection d'autres couches respectivement par répétition des étapes b) et c), et
e) séparation de la pièce de construction et du liquide support.

21. Utilisation d'une combinaison selon l'une des revendications 1 à 19 dans un procédé de phototypage rapide pour la fabrication d'une pièce de construction comprenant les étapes de:
a) confection d'une ou de plusieurs couches de pièces de construction, de préférence de 1 à 5 couches, sur un substrat de construction par dépôt sélectif du matériau de construction au moyen de la technique goutte à la demande, le substrat de construction se trouvant dans un liquide de bain si bien que la surface du substrat de construction se situe de 10 à 700 µm au-dessus de la surface du liquide de bain,
b) abaissement du substrat de construction jusqu'à ce que la couche de pièce de construction supérieure soit descendue entièrement en dessous de la surface du bain,
c) élévation du substrat de construction jusqu'à ce que la couche de pièce de construction supérieure se situe de nouveau de 10 à 700 µm au-dessus de la surface du bain liquide, les cavités dans la couche de pièce de construction supérieure étant remplies par le liquide de bain,
d) confection d'autres couches de pièces de construction (de préférence de 1 à 5 couches) par dépôt sélectif du matériau de construction au moyen de la technique goutte à la demande, la ou les nouvelles couches de la pièce de construction pouvant dépasser de la zone formée par les couches précédentes et les pièces de la nouvelle ou des nouvelles couches qui ne sont pas déposées sur les couches de pièce de construction précédentes étant protégées par le liquide de bain,
e) confection d'autres couches respectivement par répétition des étapes b), c), et d), et
f) séparation de la pièce de construction et du liquide de bain.

22. Utilisation d'une combinaison selon l'une des revendications 1 à 19 dans un procédé de phototypage rapide pour la fabrication d'une pièce de construction comprenant les étapes de :
a) confection d'une couche de pièce de construction sur un substrat de construction par dépôt sélectif du matériau de construction au moyen de la technique goutte à la demande, le substrat de construction se trouvant dans un liquide de bain si bien que la surface du substrat de construction se situe en dessous de la surface du liquide de bain,
b) abaissement du substrat de construction d'une épaisseur de couche,
c) confection d'une autre couche de pièce de construction par dépôt sélectif du matériau de construction au moyen de la technique goutte à la demande, la ou les nouvelles couches de la pièce de construction pouvant également dépasser de la zone formée par les couches précédentes et les pièces de la nouvelle ou des nouvelles couches qui ne sont pas déposées sur les couches de pièce de construction précédentes étant protégées par le liquide de bain,
d) confection d'autres couches respectivement par répétition des étapes b), c), et
e) séparation de la pièce de construction et du liquide de bain.

23. Utilisation selon l'une des revendications 20 à 22, dans laquelle on obtient des pièces de construction ayant différentes propriétés mécaniques en utilisant les diverses combinaisons de matériau de construction et de liquide de bain.

24. Utilisation selon l'une des revendications 20 à 22, dans laquelle on obtient des pièces de construction de différentes couleurs en utilisant des colorants ou des pigments dans le matériau de construction et/ou le liquide de bain.

25. Pièce de construction obtenue selon l'un des procédés décrits dans les revendications 20 à 24.

26. Pièce de construction fabriquée à partir d'une des combinaisons de matériau de construction et de liquide de bain conformément à l'une des revendications 1 à 19.

27. Utilisation d'une combinaison de matériau de construction et de liquide de bain selon l'une des revendications 1 à 19 pour la fabrication de pièces de construction tridimensionnelles.

28. Utilisation d'une combinaison de matériau de construction et de liquide de bain selon l'une des revendications 1 à 19 pour la fabrication de pièces de construction pour des applications dans le domaine médical.
